# EUROPEAN PATENT SPECIFICATION

(11) **EP 0 932 319 B1**
(45) Date of publication and mention of the grant of the patent: **02.05.2003**
(21) Application number: 99101224.6
(22) Date of filing: 22.01.1999
(51) Int. Cl.: H04Q 7/38

(54) **Handover in sectorized radiocells**
Weiterreichung in sektorisierten Funkzellen
Transfert d'appel dans des radiocellules sectorisées

(30) Priority: 26.01.1998 JP 2771298
(43) Date of publication of application: 28.07.1999
(73) Proprietor: MATSUSHITA ELECTRIC INDUSTRIAL CO., LTD., Kadoma-shi, Osaka 571-8501 (JP)
(72) Inventor: Asano, Nobuo, Yokohama-shi, Kanagawa 241-0801 (JP)
(74) Representative: Grünecker, Kinkeldey, Stockmair & Schwanhäusser Anwaltssozietät

(56) References cited:
- EP-A- 0 659 028
- WO-A-96/38015

## Description

### Field of the invention

The present invention relates to a radio communication apparatus and a radio communication method in, for example, a CDMA (Code Division Multiple Access), FDMA (Frequency Division Multiple Access) system or TDMA (Time Division Multiple Access) system.

### Description of the Related Art

In recent years, in a mobile communication field, a digital mobile communication system employing a CDMA system or a TDMA system has become predominant. In the mobile communication, a mobile station may transit from a cell (or called zone) in which the mobile station has started calling to a neighboring cell. At this point, since conditions of radio signals in the neighboring cell are usually better, the mobile station generally has a function to perform an operation to switch a communication link instantly to a base station of the neighboring cell. This operation is called handover (or handoff). Recently, a handover called MAHO(Mobile Assisted Hand Over) has become predominant. In this system, a mobile station measures a reception level from a cell locating around the cell in which the mobile station is performing a communication to report the reception level to the base station, then the base station determines based on the information whether or not the mobile station should perform a handover.

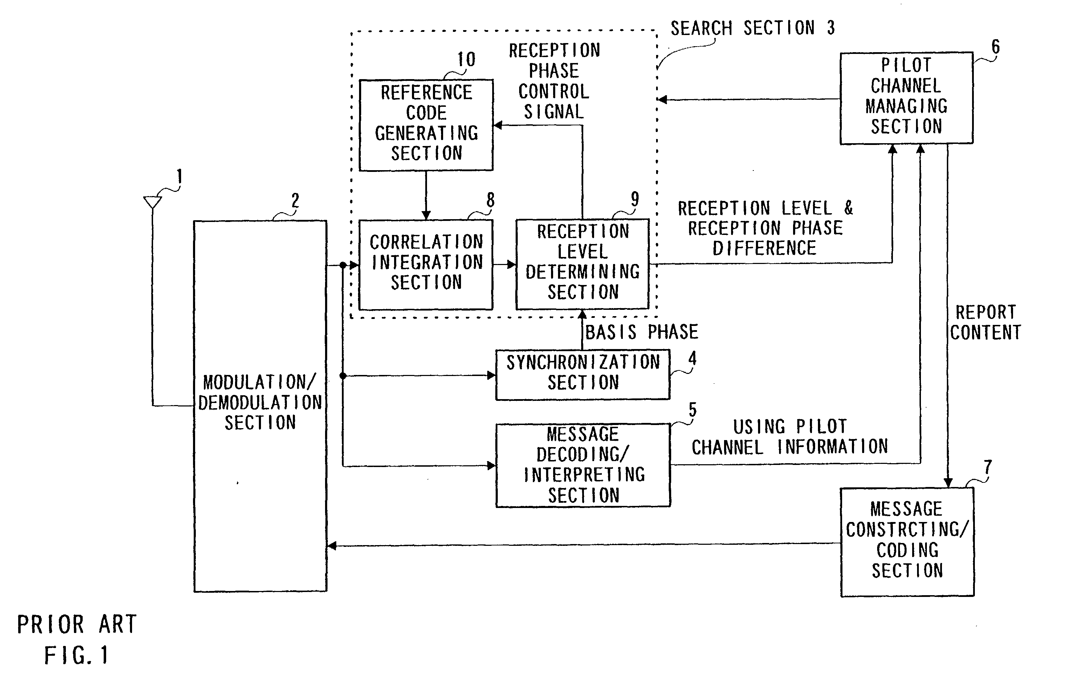

FIG.1 is a block diagram illustrating a configuration of a mobile station apparatus that is a conventional communication apparatus. In FIG.1, the mobile station apparatus includes antenna 1 for transmitting and receiving a signal, modulation/demodulation section 2 for modulating and demodulating a signal, search section 3 for searching a pilot channel signal from a cell appropriate for a handover, synchronization section 4 for acquiring synchronization with a signal, message decoding/interpreting section 5 for decoding information of the pilot channel signal to interpret, pilot channel signal managing section 6 for managing the pilot channel signals used in the system and peripheral cells, and message constructing/coding section 7 for constructing information concerning receivable pilot channel signal to code.

In addition, search section 3 includes correlation integration section 8 for performing correlation integration of received signals, reception level determining section 9 for determining a reception level of the pilot channel signal, and reference code generating section 10 for generating a reference code for a pilot channel signal using as a PN code.

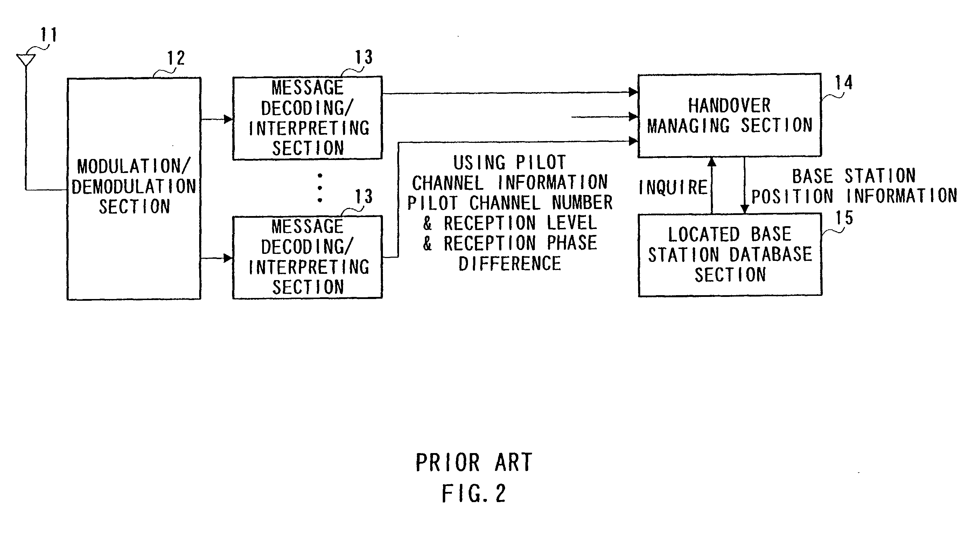

FIG.2 is a block diagram illustrating a configuration of a base station apparatus that is a conventional communication apparatus. In FIG.2, the base station apparatus includes antenna 11 for transmitting and receiving a signal, modulation/demodulation section 12 for modulating a signal to be transmitted and demodulating a received signal, a plurality of message decoding/interpreting sections 13 each for decoding information of the pilot channel signal to interpret, handover managing section 14 for managing handovers based on the information of the pilot channel signal and located base station database section 15 for storing base station position information and so on.

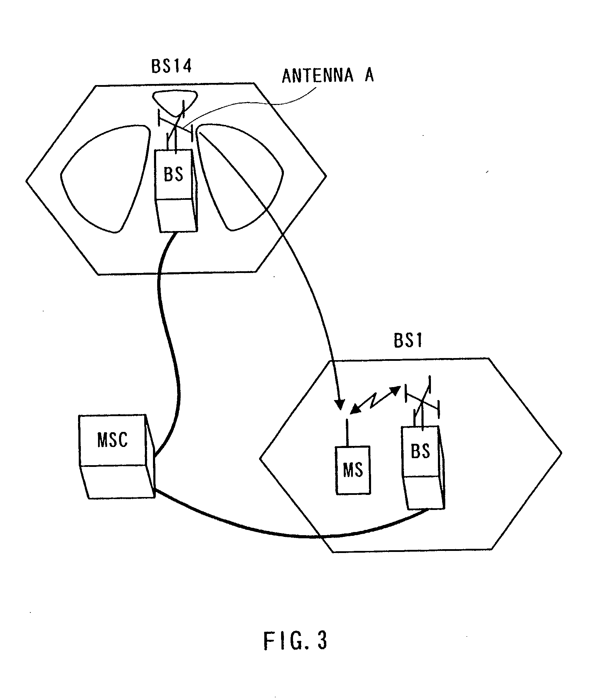

A conventional mobile communication system using the above communication apparatuses is explained with FIG.3. In FIG.3, MS denotes a mobile station having the configuration illustrated in FIG.1, BS denotes a base station having the configuration illustrated in FIG.2, and MSC(Mobile Switching Center) denotes a mobile switching center for connecting base stations.

In FIG.3, it is assumed that mobile station MS is performing a communication under the control of base station BS1. In addition, it is assumed that a CDMA system is used as an access system, a pilot channel signal is transmitted from a base station, and a mobile station receives the pilot channel signal to establish synchronization with the base station based on the pilot channel signal.

Ordinary, the base station notifies the mobile station of information on the pilot channel signals used in the system and the pilot channel signals used in peripheral cells around the base station cell. The mobile station decodes the received information on the pilot channel signal in message decoding/interpreting section 5 to interpret, and provides the message to pilot channel managing section 6. Pilot channel managing section 6 instructs search section 3 to measure reception levels of pilot channel signals used in the peripheral cells and the pilot channel signals used in the system to provide for the handover. Further, pilot channel managing section 6 manages the reception level from reception level determining section 9 in search section 3 for each pilot channel.

In addition, when pilot channel managing section 6 instructs search section 3 to measure a reception level, a frequency to instruct to measure the pilot channel signals used in the peripheral cells may be different from a frequency to instruct to measure the other pilot channel signals used in the system.

Pilot channel managing section 6 determines a threshold value on the reception level, and recognizes the reception level exceeding the threshold value as a sufficient reception level to be received where the reception level is of the pilot channel signal searched in search section 3. Then, when pilot channel managing section 6 detects the pilot channel signal with such sufficient reception level, the section 6 transmits a message including the number and the reception level, and, if necessary, further, a reception phase difference of the pilot channel signal. In this case, the reception phase difference is a phase difference between a path phase for receiving the pilot channel signal from the base station in currently communicating as a reference and a path phase for receiving the other pilot channel signal.

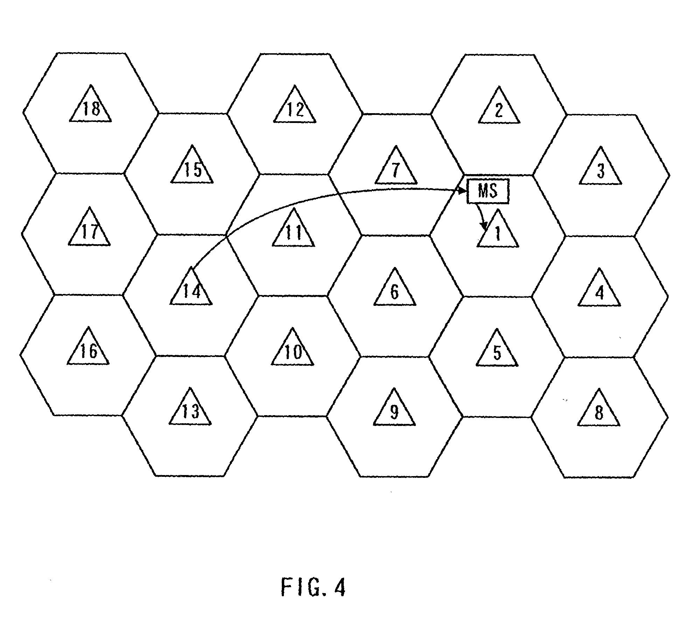

FIG.4 is a diagram to explain a cell configuration. In this case, when it is assumed that cell 1 is the base station cell, the pilot channel signals used in the peripheral cells are pilot channel signals used in cell 2 to cell 7. And the pilot channel signals used in the system are all pilot channel signals used in cell 1 to cell 18.

On the other hand, the base station decodes and interprets the above message in any one of message decoding/interpreting sections 13, and notifies handover managing section 14 of the number, the reception level and reception phase difference of the pilot channel signal. Handover managing section 14 determines whether or not a mobile station should perform a handover to the cell with the notified number of pilot channel based on the notified reception level and reception phase difference. In addition, if necessary, handover managing section 14 may inquire position information of the base station with the notified number of the pilot channel to use for the determination.

In FIG.4, when mobile station MS is in cell 1, the appropriate cell for the handover is usually either of cells 2 to 7. Accordingly, it is normal that a pilot channel signal of either of those cells has a sufficient reception level when the reception levels of the pilot channels are measured.

However it sometimes occur that the reception level of the pilot channel signal of any of not neighboring cells, for example, cell 14, is measured as a sufficient reception level, which may be caused by some conditions such as location height of a base station antenna, surroundings topography and buildings. In this case, it is necessary for the base station to control mobile station MS not to perform a handover to such cell that is not appropriate for a cell for the handover.

Thus, in the above conventional radio communication apparatus, the mobile station notifies the base station of the number of the pilot channel to receive with a sufficient reception level from among the used pilot channel signals, then the base station determines whether or not the mobile station should perform a handover.

In the conventional base station, in the case where a pilot channel number of a cell that is not appropriate for a cell for the handover is reported, it is possible to control the mobile station not to perform the handover. However, the mobile station under the control of the base station reports the pilot channel number every time when the mobile station detects the pilot channel signal, which remains the problem that the base station should perform the same processing to control the mobile station not to perform a handover every time when the base station receives the number of the pilot channel.

The mobile station spends a time for the level measurement by measuring the reception level of the pilot channel signal of the cell even though the base station recognizes that the cell is not an object cell for the handover (for example, cell 14 in FIG.4), thereby results in a useless consumption of processing resource of the mobile station.

In addition, it is understood in a system that a sufficient reception level of a signal from another cell that is not neighboring one increases avoidable interference in the cell, thereby decreasing the system capacity and deteriorating communication qualities.

WO 96/38015 A1 discloses methods for making a faster handover, and a cellular radio system. Base stations are described as calculating the location of each terminal equipment in the coverage area of the base station on the basis of the direction angle. The terminal equipments measure the signal strength from the base stations. A base station may have an antenna directivity that can be implemented with signal phasing. The phasing can be adjusted rapidly.

### SUMMARY OF THE INVENTION

It is the object of the present invention to provide a base station apparatus and a radio communication method for enabling an efficient handover to a cell appropriate for the handover.

This object is solved by the invention as claimed in the independent claims.

Preferred embodiments of the invention are defined in the dependent claims.

### BRIEF DESCRIPTION OF THE DRAWINGS

FIG.1 is a block diagram illustrating a configuration of a conventional mobile station apparatus;
FIG.2 is a block diagram illustrating a configuration of a conventional base station apparatus;
FIG.3 is a diagram to explain a conventional mobile communication system;
FIG.4 is a diagram to explain a cell configuration;
FIG.5 is a block diagram illustrating a configuration of a mobile station apparatus as a radio communication apparatus according to the first embodiment of the present invention;
FIG.6 is a block diagram illustrating a configuration of a mobile station apparatus as a radio communication apparatus according to the second embodiment of the present invention;
FIG.7 is a block diagram illustrating a configuration of a base station apparatus as a radio communication apparatus according to the third embodiment of the present invention;
FIG.8 is a block diagram illustrating a configuration of a base station apparatus as a radio communication apparatus according to the fourth embodiment of the present invention;
FIG.9 is a block diagram illustrating a configuration of a base station apparatus as a radio communication apparatus according to the fifth embodiment of the present invention;
FIG.10 is a block diagram illustrating a configuration of a mobile station apparatus as a radio communication apparatus according to the sixth embodiment of the present invention;
FIG.11 is a block diagram to explain a mobile communication system according to the seventh embodiment of the present invention;
FIG.12 is a block diagram to explain a mobile communication system according to the eighth embodiment of the present invention; and
FIG.13 is a block diagram to explain a mobile communication system according to the ninth embodiment of the present invention.

### DETAILED DESCRIPTION OF THE PREFERRED EMBODIMENTS

The embodiments of the present invention are explained in detail below with reference to attached drawings.

### (First embodiment)

In the first embodiment, a mobile station apparatus as a radio communication apparatus measures reception levels of known reference signals used in cells in the system, and when the mobile station detects the known reference signal with a sufficient reception level to receive, the mobile station prepares the number, reception level and reception phase difference, further angle difference of the known reference signal to transmit a message. The angle difference is a difference of an angle of a direction of arrival of a reception path for receiving other known reference signal that is measured using an angle of a path for receiving the known reference signal of the base station in currently communicating as a reference.

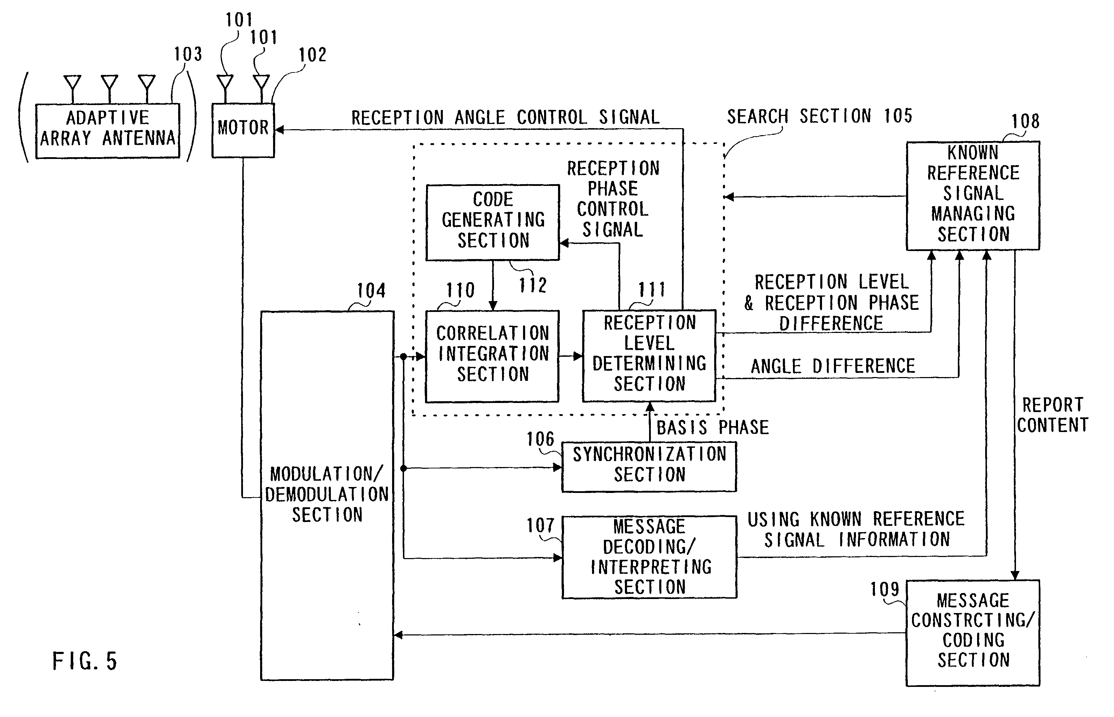

FIG.5 is a block diagram illustrating a configuration of a mobile station apparatus as a radio communication apparatus according to the first embodiment of the present invention. As illustrated in FIG.5, the mobile station apparatus according to the first embodiment includes adaptive antenna 101, angle arrangement motor 102 for adapting a direction (directivity) of the adaptive antenna, modulation/demodulation section 104 for modulating and demodulating a signal, search section 105 for searching a known reference signal from a cell appropriate for a handover, synchronization section 106 for acquiring synchronization with a signal, message decoding/interpreting section 107 for decoding information of the known reference signal to interpret, known reference signal managing section 108 for managing the known reference signals used in the system and the known reference signals used in peripheral cells, message constructing/coding section 109 for constructing information concerning receivable known reference signal to code. In addition, adaptive array antenna 103 may be used instead of adaptive antenna 101 and motor 102.

Further, search section 105 performs correlation processing of demodulated signals using PN codes, and includes correlation integration section 110 for integrating the correlation values, reception level determining section 111 for determining the reception level of the known reference signal and code generating section 112 for generating PN codes.

Next, the operation in the mobile station with the above-mentioned configuration is explained. In FIG.5, a signal received by adaptive antenna 101 is demodulated in modulation/demodulation section 104 and transmitted to message decoding/interpreting section 107. Message decoding/interpreting section 107 decodes and interprets information, which is notified to the mobile station, of the known reference signals used in the system and the known reference signals used in peripheral cells around the cell to which the mobile station belongs to notify the information on the known reference signal to known reference signal managing section 108.

Known reference signal managing section 108 instructs search section 105 to measure reception levels of known reference signals used in the peripheral cells and the known reference signals used in the system to provide for the handover. Further, known reference signal managing section 108 manages the reception level transmitted from reception level determining section 111 in search section 105 for each known reference signal.

In addition, when known reference signal managing section 108 provides the instruction for the reception level measurement to search section 105, a measurement frequency for the known reference signals used in the peripheral cells may be different from a measurement frequency for the other known reference signals used in the system.

When search section 105 receives the instruction for the reception level measurement from known reference signal managing section 108, the section 105 controls reception level determining section 111 to vary a reception phase sequentially based on the known reference signals input from synchronization section 106. Code generating section 112 generates codes based on the reception phase control signal to transmit to correlation integration section 110. Correlation integration section 110 performs correlation processing of received signals with the generated codes. Then the section 110 provides information on the reception level at a timing with the highest correlation integration value to reception level determining section 111.

Reception level determining section 111 in search section 105 detects a direction in which the highest reception level is obtained among the reception levels of known reference signals in measuring by varying a directivity of adaptive antenna 101 or adaptive array antenna 103. Then the section 111 provides the reception phase difference and the angle difference along with the obtained reception level to known reference signal managing section 108. Further, reception level determining section 111 provides a reception angle control signal to motor 102 in adaptive antenna 101 or to adaptive array antenna 103 based on the information from correlation integration section 110 to vary the directivity of adaptive antenna 101 or adaptive array antenna 103. In addition, in the case of using an adaptive array antenna, a weight by which a signal is multiplied is varied to vary a directivity.

Known reference signal managing section 108 compares the reception level of the known reference signal with the threshold value, then in the case where the reception level exceeds the threshold value, e.g., in the case of detecting the known reference signal with a sufficient reception level to receive, the section 108 reports the number, reception level, reception phase difference and reception angle difference of the detected known reference signal to message constructing/coding section 109. The reported content is constructed into a message, coded, modulated in modulation/demodulation section 104, then transmitted via adaptive antenna 101 or adaptive array antenna 103.

Known reference signal managing section 108 determines that the known reference signal with the reception level exceeding the threshold value is the known reference signal of the cell appropriate for the handover. Known reference signal managing section 108 determines the known reference signal of the cell appropriate for the handover also using the above-mentioned information on the angle difference. That is, known reference signal managing section 108 adopts the information on the difference of an angle of a direction of arrival of a reception path for receiving other known reference signal that is measured using an angle of a path for receiving the known reference signal of the base station in currently communicating as a reference. Therefore, even though it is determined that the known reference signal with the reception level exceeding the threshold value is the known reference signal of a cell appropriate for the handover, the section 108 determines that the cell is not appropriate for the handover in the case where the angle difference between the base station of the cell and the base station in currently communicating with is too large.

Then, at the time of detecting a known reference signal after this point, the section 108 operates so as not to determine the cell belonging to the base station with the large angle difference from the base station in currently communicating with is not appropriate for the handover. As a result, it is possible to select an appropriate cell for the handover effectively. In addition, the determination may be executed using the threshold value determination with respect to the angle difference from a cell belonging to the base station in currently communicating with.

Thus, since a mobile station transmits the number, reception level, and reception phase difference and angle difference of the known reference signal with sufficient level to the base station, it is possible to provide effective information to the base station to specify a cell using the known reference signal. It is thereby possible for the base station to efficiently determine whether the cell is appropriate for the cell for the handover. As a result, it makes possible to reduce redundant processing in the base station.

### (Second embodiment)

In the second embodiment, when a mobile station receives a message instructing to exclude a specific known reference signal from the object for the reception level measurement, the mobile station excludes the specific known reference signal from the object known reference signals to monitor a reception level.

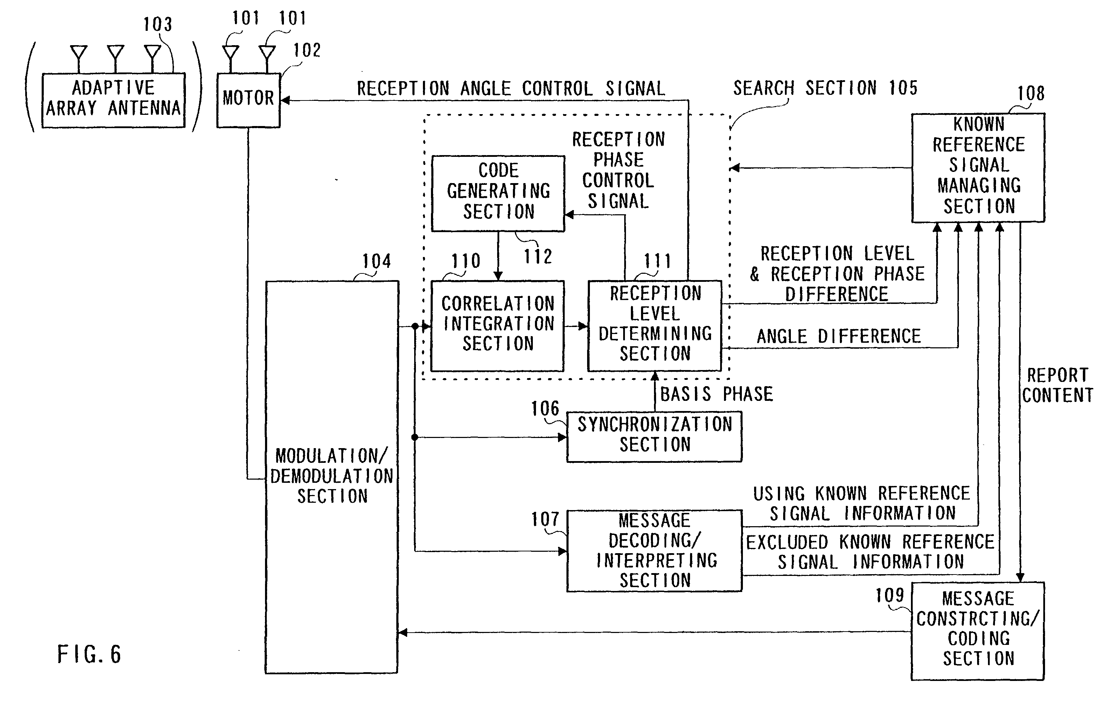

FIG.6 is a block diagram illustrating a configuration of a mobile station according to the second embodiment. As illustrated in FIG. 6, the mobile station has a configuration where message decoding/interpreting section 107 outputs excluded known reference signal information along with used known reference signal information to input to known reference signal managing section 108. Since the other configuration is the same as the mobile station apparatus illustrated in FIG.5, the same sections have the same reference numbers as in FIG.5 to omit detail explanations.

Next, the operation in the mobile station apparatus with the above configuration is explained. The operation of the mobile station apparatus illustrated in FIG.6 includes the operation in the mobile station apparatus illustrated in FIG.5. Further, message/interpreting section 107 decodes and interprets a message instructing to exclude a specific known reference signal from the object for the reception level measurement, which is included in the message notified to the mobile station, to notify the known reference signal managing section 108.

Known reference signal managing section 108 instructs search section 105 to measure known reference signals used in peripheral cells and the known reference signals used in the system to provide for the handover. At this point, the section 108 does not instruct the reception level measurement of the known reference signals instructed to be excluded.

Thus, the mobile station transmits the number, reception level and reception phase difference and angle difference of the known reference signal with sufficient reception level without the reception level measurements of unnecessary known reference signals to the base station, thereby making it possible to provide effective information at the base station to specific the cell using the known reference signal to the base station. It is thereby possible for the base station to efficiently determine whether the cell is appropriate for the cell for the handover. As a result, it makes possible to reduce the redundant processing in the base station. Further, it is possible to save processing resource in the mobile station apparatus, thereby allowing reducing of power consumption or of time period to measure reception levels of other known reference signals.

### (Third embodiment)

In the third embodiment, a base station apparatus measures the statistic of a reported known reference signal with receivable level from another base station, refers to the reported angle difference information and located base station information with respect to the known reference signal of another base station showing the receivable level in a predetermined period, detects a location of the another cell with the known reference signal, and when it is determined that the cell is not appropriate for the cell for a handover, outputs an interference degree notification signal to the another base station of that cell. In addition, in the case where it is notified that interference to a certain cell is large by the interference degree notification signal, the notified base station controls to decrease antenna directivity toward the direction to the certain cell based on the located base station information.

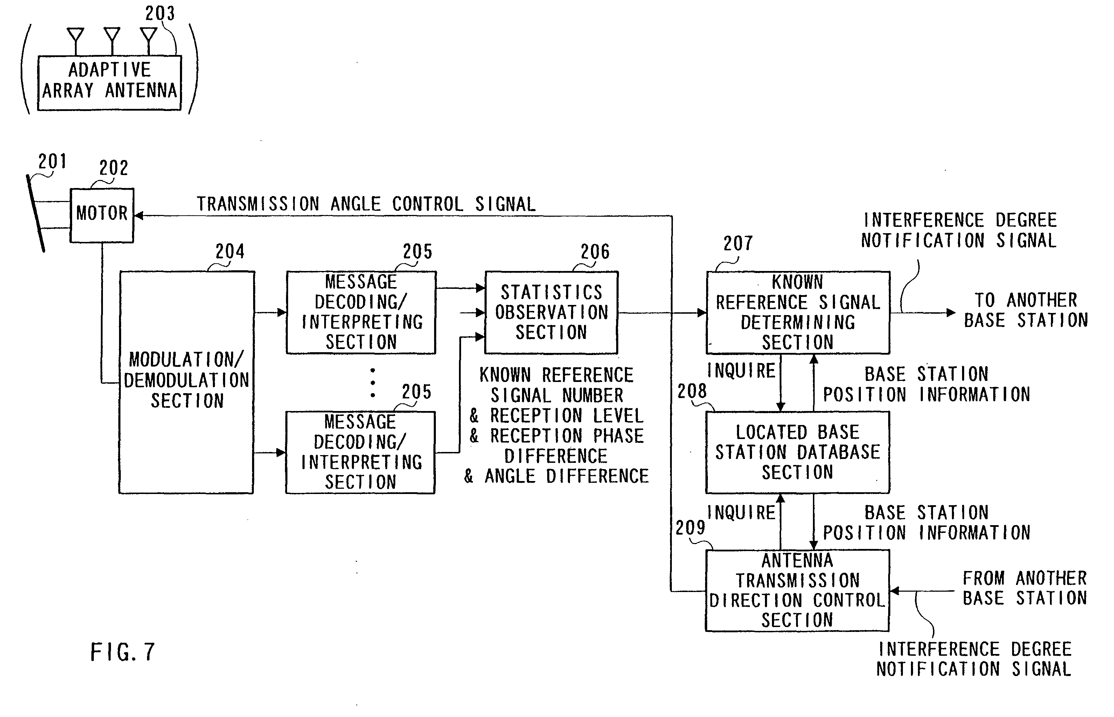

FIG.7 is a block diagram illustrating a configuration of a base station apparatus according to the third embodiment. As illustrated in FIG.7, the base station apparatus according to this embodiment includes adaptive antenna 201, angle arrangement motor 202 for adapting a direction (directivity) of the adaptive antenna, a plurality of modulation/demodulation sections 204 each for modulating and demodulating a signal, message decoding/interpreting section 205 for decoding information of the known reference signal to interpret, statistics observation section 206 that is an interference determination section for determining whether interference is present by measuring reception levels, known reference signal determining section 207 for notifying interference degree by a signal from a base station apparatus of a cell not appropriate for handover, while determining the known reference signal showing a receivable level in a predetermined period, located base station apparatus database section 208 for storing base station apparatus position information and so on, and antenna transmission direction control section 209 for adapting a direction of the antenna according to the interference degree notification. In addition, adaptive array antenna 203 may be used instead of adaptive antenna 201 and motor 202.

Next, the operation of the base station apparatus with the above-mentioned configuration is explained. In FIG.7, a signal received by adaptive antenna 201 is demodulated in modulation/demodulation section 204, then transmitted to any one of message decoding/interpreting sections 205. The message decoding/interpreting section 205 decodes and interprets a message reported from a mobile station to obtain the number, reception level, and reception phase difference and angle difference information of a known reference signal with a sufficient reception level.

The information is transmitted to statistics observation section 206, where information such as reception level is stored for each mobile station and for each known reference signal as statistics. Further, the statistics is transmitted to known reference signal determining section 207. Known reference signal determining section 207 determines whether the signal with the sufficient reception level brings interference. As a method for the determination, a method is for determining that the interference is present in the case where the same report is performed from the mobile station more than a predetermined times in a predetermined period from the time of the first report indicating the reception level of the cell not appropriate for handover is high. Another method is for determining that the interference is present in the case where the same report is performed from the mobile station more than a predetermined times after re-measurement of the reception level by the mobile station that repeats the same report at a predetermined interval from the time of the first report indicating the reception level of the cell not appropriate for handover is high.

In addition, when the known reference signal showing a receivable level in a predetermined period is present, known reference signal determining section 207 inquires the known reference signal to located base station database section 208 to acquire the position information of the base station using the known reference signal. If a plurality of base stations using the same known reference signal are present in almost equal distances from the base station, the specification of base station is further performed using the angle difference information reported from the mobile station and position information of the mobile station detected by the plurality of base stations.

When it is determined that the specified base station is located at a position not appropriate for the mobile station to perform the handover, known reference signal determining section 207 further transmits an interference degree notification signal to the other base stations to notify that the interference of the specified base station is large. In addition, in this embodiment, the statistics of the information such as reception level is observed, however which may not be necessary.

On the other hand, in a base station that has received the interference degree notification signal, antenna transmission direction control section 209 inquires the position information of the base station to which the interference is provided to located base station information database section 208, and controls to decrease the directivity of adaptive antenna 201 or adaptive array antenna 203 toward the direction to the base station to which the interference is provided using a transmission angle control signal. The control over adaptive antenna 201 is performed, for example, by varying a gradient in a vertical direction to turn lower.

Thus, when a base station detects another base station providing a sufficient reception level that is not appropriate for a mobile station to perform a handover by using a report on reception level of known reference signal, the base station notifies the another base station that the interference is large, then the notified base station controls to decrease the directivity toward the direction to the base station to which the interference is provided. As a result, it is possible to relatively decrease the reception level from the base station not appropriate for a mobile station to perform the handover so as to reduce the interference.

### (Fourth embodiment)

In the fourth embodiment, a base station apparatus measures the statistics of a reported known reference signal of the other base station providing a receivable level. With respect to a known reference signal of the other base station showing the receivable level in a predetermined period is present, the base station refers to the reported angle difference information and located base station information and detects a position of a cell with the known reference signal. When it is determined that the cell is not appropriate as a cell for the handover, the base station simultaneously notifies (all) mobile stations (under the control of the base station) of a message instructing to exclude the known reference signal from an object for reception level measurement.

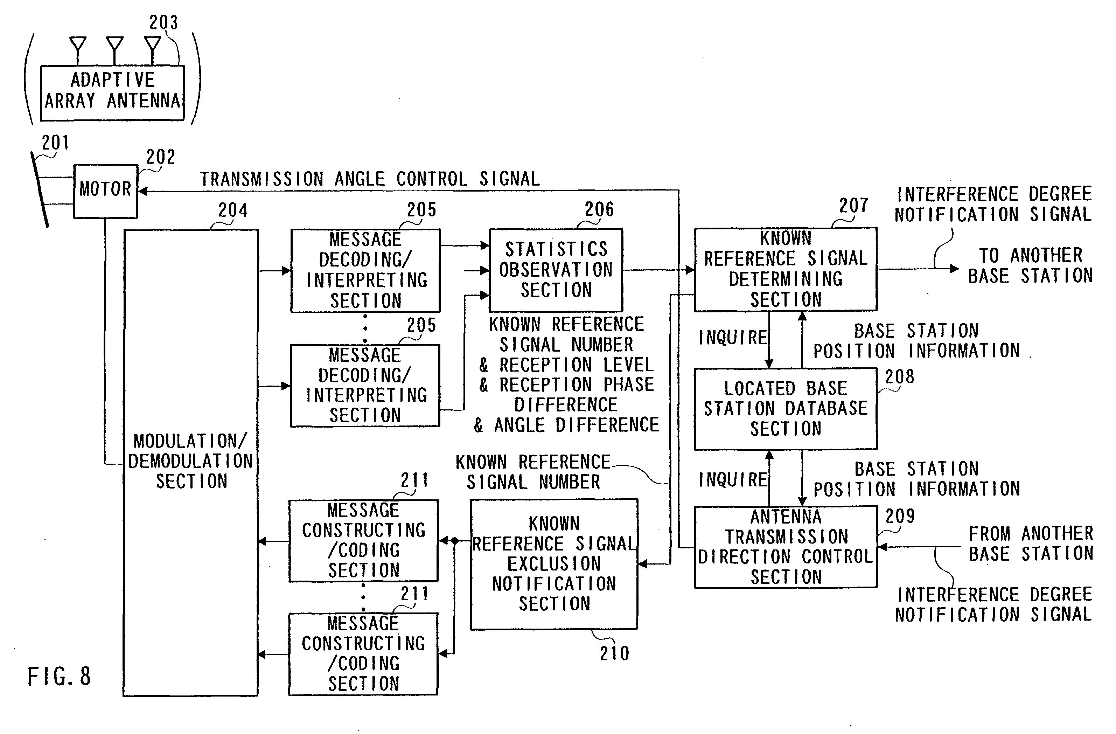

FIG.8 is a block diagram illustrating a configuration of a base station apparatus according to the fourth embodiment. As illustrated in FIG.8, the base station apparatus according to this embodiment has a configuration where the known reference signal output from known reference signal determining section 207 is input to known reference signal exclusion notification section 210, further the known reference signal exclusion notification information is input to a plurality of message constructing/coding sections 211 Since the other configuration is the same as the base station apparatus illustrated in FIG.7, the same sections have the same number as in FIG.7 to omit a detailed explanation.

Next, the operation in the base station apparatus with above configuration is explained. The operation in the base station apparatus illustrated in FIG.8 includes the operation in the base station illustrated in FIG.7. Further, when it is determined in known reference signal determining section 207 that the specified base station locates at a position not appropriate for the mobile station to perform a handover, the section 207 notifies known reference signal exclusion notification section 210 of the number of known reference signal of the specified base station.

Known reference signal exclusion notification section 210 provides the number of known reference signal to be excluded from the reception level measurement to message constructing/coding section 217 as known reference signal exclusion notification information, which is modulated in modulation/demodulation section 204 to transmit to all base stations.

Thus, in the case where a base station detects another base station providing a sufficient reception level that is not appropriate for a mobile station to perform a handover by using a report on reception level of known reference signal, the base station can simultaneous notify all mobile stations under the control of the base station that the known reference signal can be excluded from the reception level measurement. It is thereby possible to prevent the mobile station from performing a handover to the cell that is not appropriate for the handover.

### (Fifth embodiment)

In the fifth embodiment, a base station apparatus measures the statistics of a reported known reference signal of the other base station providing a receivable level. With respect to a known reference signal of the other base station showing the receivable level in a predetermined period is present, the base station refers to the reported angle difference information and located base station information and detects a position of a cell with the known reference signal. When it is determined that the cell is not appropriate as a cell for the handover, the base station notifies only the mobile station that has reported of a message instructing to exclude the known reference signal from an object for reception level measurement.

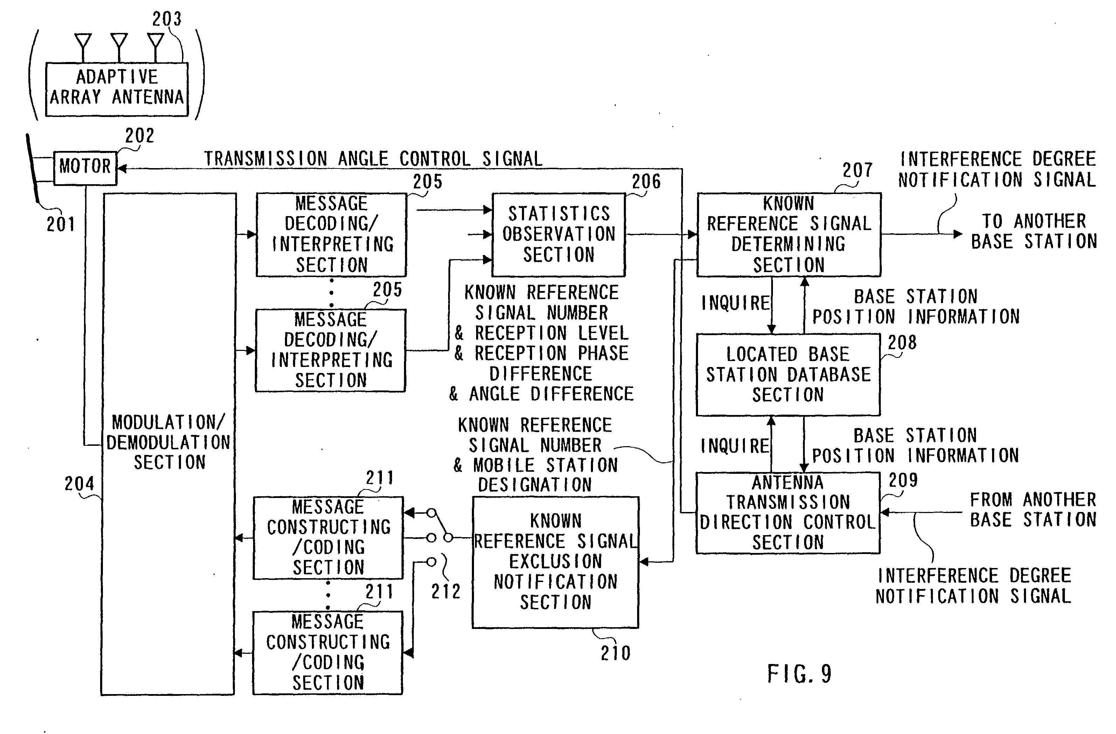

FIG.9 is a block diagram illustrating a configuration of a base station apparatus according to the fifth embodiment. As illustrated in FIG.9, the base station apparatus in this embodiment has the configuration in which switch 212 is installed in the configuration illustrated in FIG.8, where switch 212 selects one of message constructing/coding sections 211 to which known reference signal exclusion notification information is input. Since the other configuration is the same as the base station illustrated in FIG.8, the same sections have the same number as in FIG8 to omit a detailed explanation.

Next, the operation in the base station apparatus with above configuration is explained. The operation in the base station apparatus illustrated in FIG.9 includes the operation in the base station apparatus illustrated in FIG.8. The different point from the fourth embodiment is that the base station selects one of message constructing/coding sections 211 by switch 212 to notify only the mobile station that has reported the reception level of the known reference signal to be excluded, and modulation/demodulation section 204 modulates the information to transmit to a corresponding mobile station.

Thus, in the case where a base station detects another base station providing a sufficient reception level that is not appropriate for a mobile station to perform a handover by using a report on reception level of known reference signal, the base station can notify a specific mobile station that the known reference signal can be excluded from the reception level measurement. It is thereby possible for the base station to continue to monitor the reception level of the known reference signal even though the report frequency is decreased.

### (Sixth embodiment)

In the sixth embodiment, a base station apparatus measures the statistics of a reported known reference signal of the other base station providing a receivable level. With respect to a known reference signal of the other base station showing the receivable level in a predetermined period is present, the base station actually tries to receive the known reference signal and if possible, further tries to acquire the control channel information to acquire the identification number (ID) of the base station to specify.

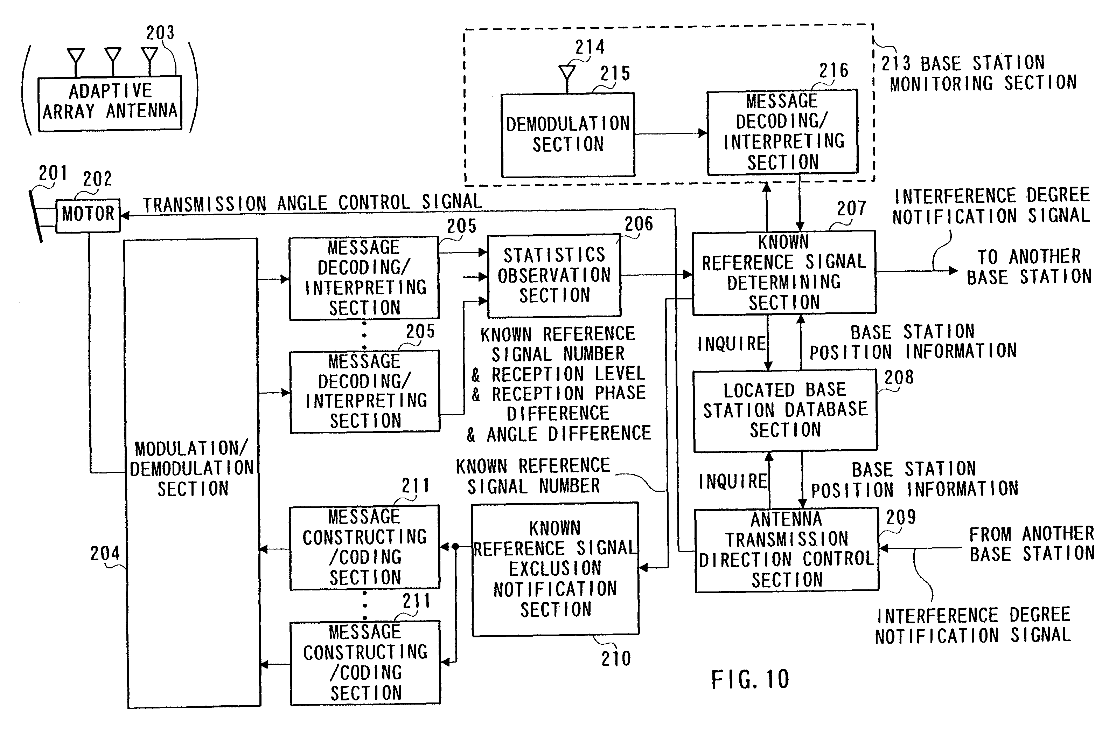

FIG.10 is a block diagram of a configuration of a base station according to the sixth embodiment. As illustrated in FIG.10, the base station apparatus according to this embodiment has the configuration where base station monitoring section 213 is installed in the configuration illustrated in FIG.8. Base station monitoring section 213 is composed of antenna 214 and demodulation section 215 which are capable of receiving a forward link, and message decoding/interpreting section 216 for capturing information from demodulated signals. Since the other configuration is the same as the base station illustrated in FIG.8, the same sections have the same number as in FIG.8 to omit a detailed explanation.

In addition, base station information is transmitted from message decoding/interpreting section 216 to known reference signal determining section 207, and known reference signal designation information to designate a known reference signal to be decoded is transmitted from known reference signal determining section 207 to message decoding/interpreting section 216.

Next, the operation in the base station apparatus with above configuration is explained. The operation in the base station apparatus illustrated in FIG.10 includes the operation in the base station apparatus illustrated in FIG.8. The different point from the fourth embodiment is that when known reference signal determining section 207 detects a known reference signal showing a receivable level, the section 207 instructs base station monitoring section 213 to demodulate the known reference signal using the known reference signal designation information. When it is determined that the known reference signal is actually receivable, base station monitoring section 213 further performs acquisition of broadcast control channel along with the known reference signal to detect the identification number (ID) of the base station.

The identification number is notified known reference signal determining section 207 as base station information, based on which, the section 207 specifies the base station apparatus by inquiring to located base station database section 208. In addition, it may be possible to install a plurality of base station monitoring sections 213, further it may not be necessary to install it or them at the same place as the main body of the base station apparatus. That is, a plurality of base station monitoring sections 213 may be located around the boundary of cells.

Thus, in the case where a base station detects a known reference signal with a sufficient reception level from another base station, it is possible for the base station to specify the another base station by performing acquisition of the number of the known reference signal and further of control channel using the base station monitoring section belonging to the base station, so as to acquire the identification number of the base station using the known reference signal, thereby allowing high accuracy specification of the base station.

### (Seventh embodiment)

The seventh embodiment describes about a mobile communication system composed of at least one of conventional mobile station apparatuses illustrated in FIG.1 and the base station apparatus according to the third embodiment (FIG.7), or a mobile communication system composed of at least one of mobile station apparatuses according to the first embodiment (FIG.7) and the base station apparatus according to the third embodiment (FIG.7).

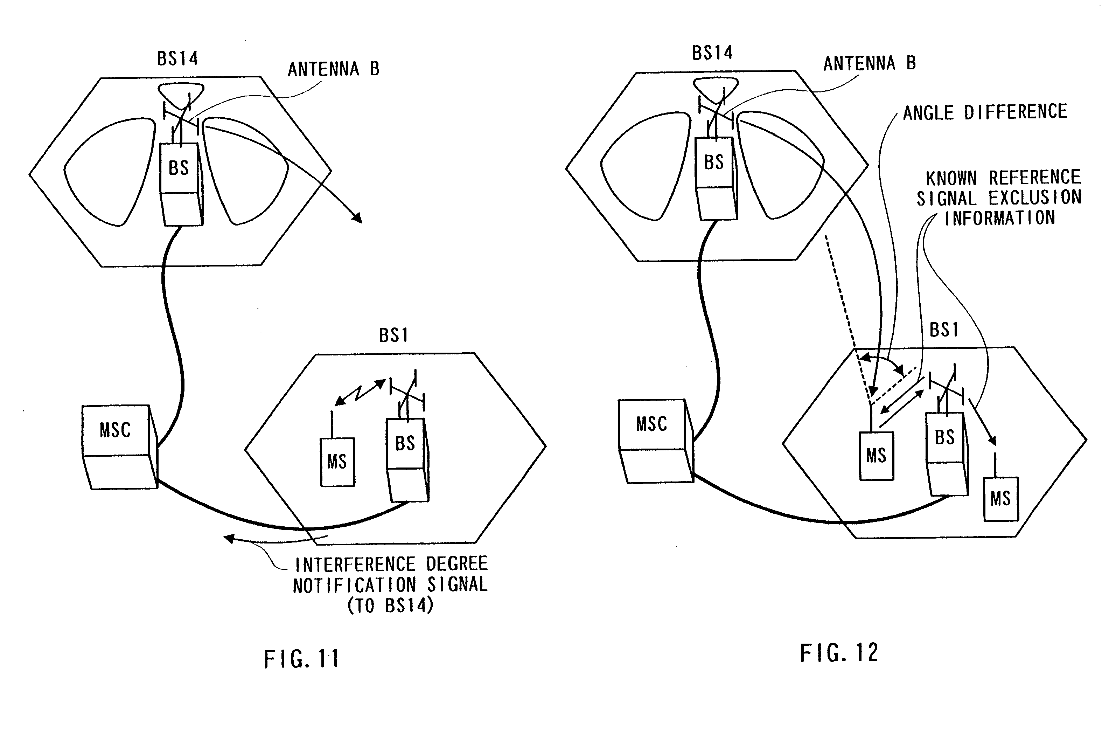

FIG.11 is a diagram illustrating a configuration of the mobile communication system according to the seventh embodiment. The base station apparatus (BS) in this embodiment illustrated in FIG.11 has a configuration illustrated in FIG.7, and the mobile station apparatus (MS) has a configuration illustrated in FIG.5 or FIG.1. In addition, MSC is a mobile station switching center, and base station BS1 and base station BS14 are connected via a single MSC or a plurality of MSC.

Next, the operation in the mobile communication system with the above configuration is explained. In FIG.11, mobile station MS is currently under the control of base station BS1, and base station BS14 is the base station of a cell not appropriate for mobile station MS to perform a handover. Based on BS1 broadcast information on the sorts of the known reference signals used in the system and on the sorts of the known reference signals used in peripheral cells around the cell which mobile station MS belongs to, mobile station MS performs reception level measurement of those known reference signals sequentially. In the case where mobile station MS finds a known reference signal with a sufficient reception level to receive, the MS transmits a message including the number, reception level, reception phase difference and angle difference of the found known reference signal to base station BS1.

Based on the received information on the number, reception level, reception phase difference and angle difference of the known reference signal, base station BS1 specifies the base station using the known reference signal as described in the third embodiment. In the case where the specified base station is BS14, since BS14 is the base station of the cell not appropriate for mobile station MS to perform a handover, base station BS1 transmits an interference degree notification signal to base station BS14.

Base station BS14 receives the interference degree notification signal, detects the direction to base station BS1, and arranges an angle of antenna B in FIG.11 to adapt lower directivity. The interference to base station BS1 is thereby reduced. If base station BS14 receives the interference degree notification again after the above processing, the BS14 re-arranges the angle of antenna B or varies an angle of other antenna.

Thus, in the case where a base station detects another base station providing a sufficient reception level that is not appropriate for a mobile station to perform a handover by using a report on reception level of known reference signal, the base station notifies the another base station that the interference is large, while the notified base station performs a control to decrease antenna directivity toward the direction to the base station to which the interference is provided, thereby allowing interference to be reduced.

### (Eighth embodiment)

The eighth embodiment describes about a mobile communication system composed of at least one of mobile station apparatuses according to the second embodiment (FIG.6) and a base station apparatus according to the fourth embodiment (FIG.8), or a mobile communication system composed of at least one of mobile station apparatuses according to the second embodiment (FIG.6) and a base station apparatus according to the fifth embodiment (FIG.7).

FIG.12 is a diagram illustrating a configuration of the mobile communication system according to the eighth embodiment. The base station apparatus (BS) in this embodiment illustrated in FIG.12 has the configuration illustrated in FIG.8 or FIG.9, and the mobile station apparatus (MS) has the configuration illustrated in FIG.6. In addition, in FIG.12, MSC is a mobile station switching center, and base station BS1 and base station BS14 are connected via a single MSC or a plurality of MSC.

Next, the operation in the mobile communication system with the above configuration is explained. The operation in the mobile communication system illustrated in FIG.12 includes the operation in the mobile communication system illustrated in FIG.11. Mobile station MS is currently under the control of base station BS1, and base station BS14 is the base station of a cell not appropriate for mobile station MS to perform a handover. Based on base station BS1 broadcast information on the sorts of the known reference signals used in the system and on the sorts of the known reference signals used in peripheral cells around the cell which mobile station MS belongs to, mobile station MS performs reception level measurement of those known reference signals sequentially. In the case where mobile station MS finds a known reference signal with a sufficient reception level to receive, the MS transmits a message including the number, reception level, reception phase difference and angle difference of the found known reference signal to base station BS1.

Based on the received information on the number, reception level, reception phase difference and angle difference of the known reference signal, base station BS1 specifies the base station using the known reference signal as described in the third embodiment. In the case where the specified base station is BS14, since BS14 is the base station of the cell not appropriate for mobile station MS to perform a handover, base station BS1 next transmits a message instructing to exclude the known reference signal number used by base station BS14 from the object for reception level measurement to simultaneously notify all mobile stations under the control of the base station BS1 or only the mobile station that has reported the reception level of the known reference signal number. The mobile station that has received the exclusion instruction message is controlled not to perform the reception level measurement of the known reference signal number after the reception of the message.

Thus, in the case where a base station detects another base station providing a sufficient reception level that is not appropriate for a mobile station to perform a handover by using a report on reception level of known reference signal, the base station can simultaneously notify all mobile stations under the control of the base station BS1 that it is possible to exclude the known reference signal number from the object for reception level measurement, thereby allowing reducing of the processing load in a mobile station for the reception level measurement of known reference signals.

Further, in the case where the base station notifies only a mobile station that has reported the known reference signal that it is possible to exclude the known reference signal number from the object for reception level measurement, however each mobile station should measure the reception level of the known reference signal once, after the measurement, the mobile station can exclude the measurement and thereby is permitted to reduce processing load, while the base station can continue to monitor the reception level even though the report frequency is decreased.

### (Ninth embodiment)

The ninth embodiment describes about a mobile communication system composed of at least one of mobile station apparatuses according to the second embodiment (FIG. 6) and the base station apparatus according to a sixth embodiment (FIG.10).

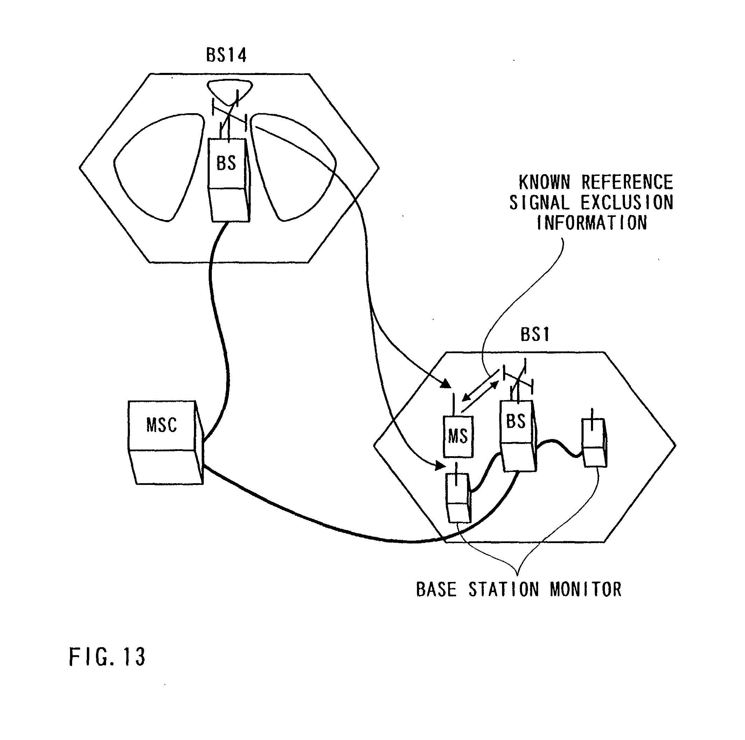

FIG.13 is a diagram illustrating a configuration of the mobile communication system according to the ninth embodiment. The base station apparatus (BS) in this embodiment illustrated in FIG.13 has the configuration illustrated in FIG.10, and the mobile station apparatus (MS) has the configuration illustrated in FIG.2. In addition, in FIG.13, MSC is a mobile station switching center, and base station BS1 and base station BS14 are connected via a single MSC or a plurality of MSC.

Next, the operation in the mobile communication system with the above configuration is explained. The operation in the mobile communication system illustrated in FIG.13 includes the operation in the mobile communication system illustrated in FIG.12. Mobile station MS is currently under the control of base station BS1, and base station BS14 is the base station of a cell not appropriate for mobile station MS to perform a handover. Based on base station BS1 broadcast information on the sorts of the known reference signals used in the system and on the sorts of the known reference signals used in peripheral cells around the cell which mobile station MS belongs to, mobile station MS performs reception level measurement of those known reference signals sequentially. In the case where mobile station MS finds a known reference signal with a sufficient reception level to receive, the MS transmits a message including the number, reception level, reception phase difference and angle difference of the found known reference signal to base station BS1.

Base station BS1 sets the reported known reference signal number at a base station monitor to try to receive. When the reception is succeeded, base station BS1 further tries to acquire a control channel broadcast along with the known reference signal. At this point, base station BS1 detects the identification number (ID) of the base station that is included in a message in the control channel. In the case where the detected base station is BS14, since BS14 is the base station not appropriate for the mobile station to perform a handover, base station BS1 next transmits a message instructing to exclude the known reference signal number used by base station BS14 from the object for reception level measurement to simultaneously notify all mobile stations under the control of the base station BS1 or only the mobile station that has reported the reception level of the known reference signal number, or transmits an interference degree notification signal to base station BS14.

Thus, in the case where a base station detects a known reference signal with a sufficient reception level from another base station, the base station performs acquisition of the known reference signal using a base station monitor equipped with the base station to obtain the identification number of the base station using the known reference signal, thereby is allowed to specify the base station with high accuracy.

It is preferable to practice by combining any of above-mentioned first embodiment to ninth embodiment.

In above-mentioned first embodiment to ninth embodiment, it is preferable to use a pilot channel signal or a pilot symbol as a known reference signal. Particularly, in the case of using a pilot symbol as a known reference signal, it is necessary to provide a timing control section in the apparatus of the present invention. Further, the present invention is applicable to the case where a frequency according to a TDMA system is used as a known reference signal. Therefore, the present invention is applicable to a communication system in a FDMA system, the TDMA system or others.

In addition, the above-mentioned embodiments describes about the case where a reception (electric field) level is used as reception quality. However the present invention is applicable to the case where a ratio of measured channel power to total reception power, bit error rate of measured channel or others is used. Particularly, it is preferable to use the ratio of measured channel power to total reception power as reception quality.

As described above, a communication apparatus and a communication method of the present invention enable a base station to notify simultaneously all base stations under the control of the base station or only a mobile station that has reported to exclude the known reference signal of a cell that is determined not appropriate for a mobile station to perform a handover from the object for reception level measurement. As a result, the base station can avoid frequent reports of the known reference signal with high reception quality but no possibility for a handover, thereby allowing reducing of a processing load in the base station.

In addition, it is possible to exclude processing for unnecessary known reference signal so as to reduce a processing load in a mobile station, thereby making it possible to reduce power consumption in a terminal or to save processing resource to assign to measure other known reference signal.

In addition, a base station notifies another base station of a cell using a known reference signal where the cell is determined not appropriate for handover of interference degree, and the notified base station controls to decrease the antenna directivity toward the direction to the base station notifying so as to reduce the interference to the base station notifying, thereby making it possible to prevent a system capacity from decreasing or communication performance from deteriorating.

Further, it is possible to perform a specification of a base station providing interference more exactly by providing a device to monitor other base stations, thereby allowing reducing of excess operations in base station caused by wrong specification of a base station.

## Claims

1. A base station apparatus **characterized by**:
interference determining means (206) for determining whether interference is provided to a cell of the base station by a known reference signal of a cell of another base station; and
transmitting means (207) for transmitting interference degree information to the interfering base station that provides the interference to the cell of said base station.

2. The apparatus according to claim 1, **characterized by**:
receiving means for receiving information concerning a reception phase difference and an angle difference of a direction of arrival of a known reference signal in a plurality of communication partners from a communication terminal apparatus; and
position detecting means for detecting a position of said interfering base station based on the angle difference information.

3. The apparatus according to claim 2, further **characterized by** memory means to store located base station information, wherein said position detecting means specifies the position of said interfering base station based on said located base station information.

4. The apparatus according to claim 3, **characterized in that** said receiving means receives information indicating that a reception quality from said interfering base station is high from a communication terminal apparatus.

5. The apparatus according to claim 1, **characterized by** receiving means for receiving information on the interfering base station, wherein said interference determining means determines that the interference is provided to the cell of said base station when said receiving means receives the information on the interfering base station more than a predetermined times in a predetermined period.

6. The apparatus according to claim 1, **characterized by** base station monitoring means for trying a reception from the interfering base station, receiving an identification number of said interfering base station from said interfering base station, and specifying a position of said interfering base station.

7. The apparatus according to claim 6, **characterized in that** said base station monitoring means specifies the position of said interfering base station based on the located base station information.

8. A base station apparatus comprising:
an antenna (101,103) with a variable directivity;
**characterized by**
antenna controlling means (209) for decreasing an antenna directivity toward a specified direction when said base station receives interference degree information indicating that said base station provides interference to another cell except a cell of said base station.

9. The apparatus according to claim 8, **characterized by** memory means to store located base station information, wherein said antenna controlling means (209) decreases said antenna directivity based on said located base station information.

10. A radio communication method **characterized by** the steps of:
determining in a base station whether interference is provided to a cell of the base station by a known reference signal of a cell of another base station; and
transmitting interference degree information to the interfering base station when it is determined that the interference is provided to the cell.

11. The method according to claim 10, **characterized in that** the step of determining whether the interference is provided to the cell is performed based on information from a mobile station concerning a reception phase difference and an angle difference of a direction of arrival of a known reference signal between said base station of the cell and the another base station of another cell.

12. The method according to claim 11, **characterized in that** in the step of determining whether the interference is provided to the cell, it is determined that the interference is provided to the cell when said base station receives information indicating a reception quality from the another interfering base station is high more than a predetermined times in a predetermined period.

13. The method according to claim 11, **characterized in that** the step of determining whether the interference is provided to the cell comprises the step of instructing the mobile station to measure the reception quality again at each predetermined period when said base station receives information indicating the reception quality from the another interfering base station is high, and it is determined that the interference is provided to the cell when the base station receives the information indicating a reception quality from the another interfering base station is high more than a predetermined times.

14. The method according to claim 10, further **characterized by** the step of:
trying to receive information from the another interfering base station to acquire an identification number of the another interfering base station from said another interfering base station when it is determined in said base station that the interference is provided to the cell of said base station.

15. The method according to claim 14, **characterized by** the step of simultaneously transmitting to at least one of communication terminal apparatuses under a control of said base station a notification to exclude the known reference signal of said another interfering base station from a measurement object when it is determined that the interference is provided to the cell of said base station.

16. The method according to claim 14, **characterized by** the step of transmitting to at least one of communication terminal apparatus under the control of said base station a notification to exclude the known reference signal of said another interfering base station from the measurement object when it is determined that the interference is provided to the cell of said base station.

17. The method according to claim 10, further **characterized by** the step of:
decreasing an antenna directivity toward a specified direction in said another interfering base station apparatus that receives the interference degree information indicating the interference is provided to the cell of said base station.

18. A radio communication method **characterized by** the steps of:
receiving in a base station having an antenna (101, 103) with a variable directivity interference degree information indicating that the base station provides interference to another cell except a cell of the base station; and
decreasing an antenna directivity toward a specified direction when said interference degree information is received.

## Patentansprüche

1. Basisstationsgerät, **gekennzeichnet durch**:
eine Interferenz-Bestimmungseinrichtung (206) zum Bestimmen, ob eine Interferenz zu einer Zelle der Basisstation **durch** ein bekanntes Referenz-Signal einer Zelle einer anderen Basisstation geliefert wird; und
eine Sendeeinrichtung (207) zum Senden von Interferenz-Grad-Informationen zu der störenden Basisstation, die die Interferenz zu der Zelle der Basisstation liefert.

2. Gerät nach Anspruch 1, **gekennzeichnet durch**:
eine Empfangseinrichtung zum Empfangen von Informationen, die sich auf eine Empfangsphasendifferenz und eine Winkeldifferenz einer Richtung einer Ankunft eines bekannten Referenz-Signals in eine Mehrzahl von Kommunikations-Partnern von einer Kommunikations-Terminal-Vorrichtung beziehen; und
eine Positions-Erfassungs-Einrichtung zum Erfassen einer Position der störenden Basisstation basierend auf den Winkeldifferenzinformationen.

3. Gerät nach Anspruch 2, gekennzeichnet weiterhin durch eine Speichereinrichtung, um Informationen über die lokalisierte Basisstation zu speichern, wobei die Position-Erfassungseinrichtung die Position der störenden Basisstation, basierend auf Informationen über die lokalisierte Basisstation, spezifiziert.

4. Gerät nach Anspruch 3, **dadurch gekennzeichnet, dass** die Empfangseinrichtung Informationen empfängt, die anzeigen, dass eine Empfangsqualität von der störenden Basisstation hoch, von einem Kommunikations-Terminal-Gerät, ist.

5. Gerät nach Anspruch 1, **gekennzeichnet durch** eine Empfangseinrichtung zum Empfangen von Informationen über die störende Basisstation, wobei die Interferenz-Bestimmungseinrichtung bestimmt, dass die Interferenz zu der Zelle der Basisstation geliefert wird, wenn die Empfangseinrichtung die Informationen über die störende Basisstation mehr als eine vorbestimmte Anzahl von Malen in einer vorbestimmten Periode empfängt.

6. Gerät nach Anspruch 1, **gekennzeichnet durch** eine Basisstation-Überwachungseinrichtung, um einen Empfang von der störenden Basisstation zu versuchen, um eine Identifikations-Nummer der störenden Basisstation von der störenden Basisstation zu empfangen und um eine Position der störenden Basisstation zu spezifizieren.

7. Gerät nach Anspruch 6, **dadurch gekennzeichnet, dass** die Basisstation-Überwachungseinrichtung die Position der störenden Basisstation basierend auf den Informationen über die lokalisierte Basisstation spezifiziert.

8. Basisstationsgerät, das aufweist:
eine Antenne (101,103) mit einer variablen Direktivität;
**gekennzeichnet durch**
eine Antennen-Steuereinrichtung (209) zum Verringern einer Antennen-Direktivität zu einer spezifizierten Richtung hin, wenn die Basisstation Interferenz-Gradinformationen empfängt, die anzeigen, dass die Basisstation eine Interferenz zu einer anderen Zelle liefert, mit Ausnahme einer Zelle der Basisstation.

9. Gerät nach Anspruch 8, **gekennzeichnet durch** eine Speichereinrichtung, um Informationen über eine lokalisierte Basisstation zu speichern, wobei die Antennen-Steuereinrichtung (209) die Antennen-Direktivität basierend auf den Informationen der lokalisierten Basisstation verringert.

10. Funkkommunikationsverfahren, **gekennzeichnet durch** die Schritte:
Bestimmen in einer Basisstation, ob eine Interferenz zu einer Zelle der Basisstation geliefert wird, **durch** ein bekanntes Referenz-Signal einer Zelle einer anderen Basisstation; und
Übertragen von Interferenz-Grad-Informationen zu der störenden Basisstation, wenn bestimmt ist, dass die Interferenz zu der Zelle hin erfolgt.

11. Verfahren nach Anspruch 10, **gekennzeichnet dadurch, dass** der Schritt einer Bestimmung, ob die Interferenz zu der Zelle hin erfolgt, basierend auf Informationen von einer mobilen Station durchgeführt wird, betreffend eine Empfangsphasendifferenz und eine Winkeldifferenz einer Richtung einer Ankunft eines bekannten Referenz-Signals zwischen der Basisstation der Zelle und der anderen Basisstation einer anderen Zelle.

12. Verfahren nach Anspruch 11, **dadurch gekennzeichnet, dass** in dem Schritt einer Bestimmung, ob die Interferenz zu der Zelle hin erfolgt, bestimmt wird, dass die Interferenz zu der Zelle hin erfolgt, wenn die Basisstation Informationen empfängt, die anzeigen, dass eine Empfangsqualität von der anderen, störenden Basisstation mehr als eine vorbestimmte Anzahl von Malen in einer vorbestimmten Periode hoch ist.

13. Verfahren nach Anspruch 11, **gekennzeichnet dadurch, dass** der Schritt einer Bestimmung, ob die Interferenz zu der Zelle hin erfolgt, den Schritt eines Instruierens der mobilen Station, die Empfangsqualität wieder bei jeder vorbestimmten Periode zu messen, wenn die Basisstation Informationen empfängt, die anzeigen, dass die Empfangsqualität von der anderen, störenden Basisstation hoch ist, aufweist, und wobei bestimmt wird, dass die Interferenz zu der Zelle erfolgt, wenn die Basisstation die Informationen empfängt, die anzeigen, dass eine Empfangsqualität von der anderen, störenden Basisstation mehr als eine vorbestimmte Anzahl von Malen hoch ist.

14. Verfahren nach Anspruch 10, das weiterhin durch den Schritt gekennzeichnet ist:
Versuchen, Informationen von der anderen, störenden Basisstation zu empfangen, um eine Identifikations-Zahl der anderen, störenden Basisstation von der anderen, störenden Basisstation zu erhalten, wenn in der Basisstation bestimmt ist, dass die Interferenz zu der Zelle der Basisstation hin erfolgt.

15. Verfahren nach Anspruch 14, **gekennzeichnet durch** den Schritt eines simultanen Übertragens zu mindestens einer der Kommunikations-Terminal-Geräte unter einer Steuerung der Basisstation eines Hinweises, um das bekannte Referenz-Signal der anderen, störenden Basisstation von einem Messungs-Objekt auszuschließen, wenn bestimmt ist, dass die Interferenz zu der Zelle der Basisstation hin erfolgt.

16. Verfahren nach Anspruch 14, **gekennzeichnet durch** den Schritt eines Sendens zu mindestens einem Kommunikations-Terrninal-Gerät unter der Steuerung der Basisstation eines Hinweises, das bekannte Referenz-Signal der anderen, störenden Basisstation von dem Messungs-Objekt auszuschließen, wenn bestimmt ist, dass die Interferenz zu der Zelle der Basisstation hin erfolgt.

17. Verfahren nach Anspruch 10, das weiterhin durch den Schritt gekennzeichnet ist:
Verringern einer Antennen-Direktivität zu einer spezifizierten Richtung in dem anderen, störenden Basisstationsgerät hin, das die Interferenz-Grad-Informationen empfängt, die anzeigen, dass die Interferenz zu der Zelle der Basisstation hin erfolgt.

18. Funkkommunikationsverfahren, **gekennzeichnet durch** die Schritte:
Empfangen in einer Basisstation, die eine Antenne (101,103) mit einer variablen Direktivität besitzt, von Interferenz-Grad-Informationen, die anzeigen, dass die Basisstation eine Interferenz zu einer anderen Zelle mit Ausnahme einer Zelle der Basisstation liefert; und
Verringern einer Antennen-Direktivität zu einer spezifizierten Richtung hin, wenn die Interferenz-Grad-Informationen empfangen sind.

## Revendications

1. Appareil de station de base **caractérisé par** :
un moyen de détermination d'interférence (206) destiné à déterminer si une interférence est produite sur une cellule de station de base par un signal de référence connu d'une cellule d'une autre station de base, et
un moyen d'émission (207) destiné à émettre des informations de degré d'interférence à la station de base perturbatrice qui produit l'interférence sur la cellule de ladite station de base.

2. Appareil selon la revendication 1, **caractérisé par** :
un moyen de réception destiné à recevoir des informations concernant une différence de phase de réception et une différence d'angle d'une direction d'arrivée d'un signal de référence connu dans une pluralité de correspondants de communication depuis un appareil terminal de communication, et
un moyen de détection de position destiné à détecter une position de ladite station de base perturbatrice sur la base d'informations de différence d'angle.

3. Appareil selon la revendication 2, **caractérisé en outre par** un moyen de mémoire destiné à mémoriser les informations de station de base localisée, dans lequel ledit moyen de détection de position spécifie la position de ladite station de base perturbatrice sur la base desdites informations de station de base localisée.

4. Appareil selon la revendication 3, **caractérisé en ce que** ledit moyen de réception reçoit des informations indiquant qu'une qualité de réception depuis ladite station de base perturbatrice est élevée depuis un appareil terminal de communication.

5. Appareil selon la revendication 1, **caractérisé par** un moyen de réception destiné à recevoir des informations sur la station de base perturbatrice, dans lequel ledit moyen de détermination d'interférence détermine que l'interférence est produite sur la cellule de ladite station de base quand ledit moyen de réception reçoit les informations sur ladite station de base perturbatrice pendant plus d'une durée prédéterminée dans un intervalle de temps prédéterminé.

6. Appareil selon la revendication 1, **caractérisé par** un moyen de surveillance de station de base pour essayer une réception depuis la station de base perturbatrice, recevoir un numéro d'identification de ladite station de base perturbatrice depuis ladite station de base perturbatrice, et spécifier une position de ladite station de base perturbatrice.

7. Appareil selon la revendication 6, **caractérisé en ce que** ledit moyen de surveillance de station de base spécifie la position de ladite station de base perturbatrice sur la base d'informations de la station de base localisée.

8. Un appareil de station de base comprenant :
une antenne (101, 103) ayant une directivité variable,
**caractérisé par**
un moyen de commande d'antenne (209), destiné à diminuer une directivité d'antenne dans une direction spécifiée quand ladite station de base reçoit une information de degré d'interférence indiquant que ladite station de base produit une interférence sur une autre cellule, à l'exception d'une cellule de ladite station de base.

9. Appareil selon la revendication 8, **caractérisé par** un moyen de mémoire pour mémoriser des informations de station de base localisée, dans lequel ledit moyen de commande d'antenne (209) diminue ladite directivité d'antenne sur la base desdites informations de station de base localisée.

10. Procédé de radiocommunication **caractérisé par** les étapes consistant à :
déterminer dans une station de base si l'interférence est produite sur une cellule de la station de base par un signal de référence connu d'une cellule d'une autre station de base, et
transmettre les informations de degré d'interférence à la station de base perturbatrice quand il est déterminé que l'interférence est produite sur la cellule.

11. Procédé selon la revendication 10, **caractérisé en ce que** l'étape de détermination de ce que l'interférence est produite sur la cellule, est exécutée sur la base d'informations depuis une station mobile, concernant une différence de phase de réception et une différence d'angle d'une direction d'arrivée d'un signal de référence connu entre ladite station de base de la cellule et une autre station de base d'une autre cellule.

12. Procédé selon la revendication 11, **caractérisé en ce que** dans l'étape de détermination de ce que l'interférence est produite sur la cellule, il est déterminé que l'interférence est produite sur la cellule quand ladite station de base reçoit des informations indiquant qu'une qualité de réception depuis l'autre station de base perturbatrice est élevée plus que pendant une durée prédéterminée dans un intervalle de temps prédéterminé.

13. Procédé selon la revendication 11, **caractérisé en ce que** l'étape de détermination de ce que l'interférence est produite sur la cellule, comprend l'étape consistant à charger la station mobile de mesurer à nouveau la qualité de réception à chaque intervalle de temps prédéterminé quand ladite station de base reçoit des informations indiquant que la qualité de réception depuis l'autre station de base perturbatrice est élevée, et qu'il est déterminé que l'interférence est produite sur la cellule quand la station de base reçoit les informations indiquant qu'une qualité de réception depuis l'autre station de base perturbatrice est élevée plus que pendant une durée prédéterminée.

14. Procédé selon la revendication 10, **caractérisé en outre par** les étapes consistant à :
essayer de recevoir des informations depuis l'autre station de base perturbatrice pour acquérir un numéro d'identification de l'autre station de base perturbatrice depuis ladite autre station de base perturbatrice, lorsqu'il est déterminé dans ladite station de base que l'interférence est produite sur la cellule de ladite station de base.

15. Procédé selon la revendication 14, **caractérisé par** l'étape consistant à transmettre simultanément à au moins un des appareils terminaux de communication, sous une commande de ladite station de base, une notification d'exclure d'un objet de mesure le signal de référence connu de ladite autre station de base perturbatrice, lorsqu'il est déterminé que l'interférence est produite sur la cellule de ladite station de base.

16. Procédé selon la revendication 14, **caractérisé par** l'étape consistant à transmettre à au moins un appareil terminal de communication, sous la commande de ladite station de base, une notification d'exclure d'un objet de mesure le signal de référence connu de ladite autre station de base perturbatrice, lorsqu'il est déterminé que l'interférence est produite sur la cellule de ladite station de base.

17. Procédé selon la revendication 10, **caractérisé en outre par** l'étape consistant à :
diminuer une directivité d'antenne vers une direction spécifiée dans un appareil de ladite autre station de base perturbatrice qui reçoit les informations de degré d'interférence indiquant que l'interférence est produite sur la cellule de ladite station de base.

18. Procédé de radiocommunication **caractérisé par** les étapes consistant à :
recevoir dans une station de base ayant une antenne (101, 103) avec une directivité variable, des informations de degré d'interférence indiquant que la station de base produit une interférence sur une autre cellule excepté une cellule de la station de base, et
diminuer une directivité d'antenne vers une direction spécifiée lorsque lesdites informations de degré d'interférence sont reçues.
